# EUROPEAN PATENT SPECIFICATION

(11) **EP 4 401 162 B1**
(45) Date of publication and mention of the grant of the patent: **21.10.2026**
(21) Application number: 21966100.6
(22) Date of filing: 03.12.2021
(51) Int. Cl.: H01M 10/0567, H01M 10/0525, H01M 4/587, H01M 4/525, H01M 4/133, H01M 4/02, H01M 4/131, H01M 10/0568, H01M 10/0569

(54) **ELECTROCHEMICAL DEVICE AND ELECTRONIC DEVICE**
ELEKTROCHEMISCHE VORRICHTUNG UND ELEKTRONISCHE VORRICHTUNG
DISPOSITIF ÉLECTROCHIMIQUE ET DISPOSITIF ÉLECTRONIQUE

(43) Date of publication of application: 17.07.2024
(73) Proprietor: Ningde Amperex Technology Limited, Zhangwan Town, Jiaocheng District Ningde City Fujian 352100 (CN)
(72) Inventor: LIU, Jianyu, Ningde City, Fujian 352100 (CN); TANG, Chao, Ningde City, Fujian 352100 (CN)
(74) Representative: Kraus & Lederer PartGmbB
(86) International application number: PCT/CN2021/135413
(87) International publication number: WO 2023/097674

(56) References cited:
- EP-A1- 2 650 959
- EP-A1- 3 627 605
- EP-A1- 4 123 752
- WO-A1-2021/184247
- CN-A- 103 493 276
- CN-A- 109 473 713
- CN-A- 113 097 433
- CN-A- 113 161 515
- CN-A- 113 451 653
- KR-A- 20130 095 510

## Description

### TECHNICAL FIELD

This application relates to the technical field of electrochemistry, and in particular, to an electrochemical device and an electronic device.

### BACKGROUND

By virtue of a high specific energy, a high working voltage, a low self-discharge rate, a small size, a light weight, and other characteristics, lithium-ion batteries are widely used in various fields such as electrical energy storage, portable electronic devices, and electric vehicles. With increasingly wider application of the lithium-ion batteries, higher requirements are imposed on the lithium-ion batteries. For example, a lithium-ion battery is required to have a faster charging speed and a longer service life.

However, when the charging speed of the lithium-ion battery is higher, the lithium-ion battery is more prone to lithium plating, thereby impairing the cycle performance and safety of the lithium-ion battery.

EP3 627 605 A1, CN 109 473 713 A, KR 2013 0095510 A and WO 2021/184247 A1 all refer to lithium secondary batteries comprising a negative electrode with a carbon-based active material (preferably graphite) and an electrolytic solution comprising fluoroethylene carbonate (FEC) and a trinitrile compound as additives.

CN 113 097 433 A describes an electrochemical device comprising a positive electrode, a graphite-based negative electrode, a separator, and an electrolytic solution comprising FEC as additive, wherein the negative electrode includes a first active material with a defect rate illustrated by an Id/Ig ratio of 0.05 to 0.4 and second active material with an Id/Ig ratio of 0.2 to 0.8.

### SUMMARY

An objective of this application is to provide an electrochemical device and an electronic device to improve cycle performance of the electrochemical device. Specific technical solutions are as follows:
A first aspect of this application provides an electrochemical device, including a positive electrode, a negative electrode, a separator, and an electrolytic solution. The electrolytic solution includes fluoroethylene carbonate and a trinitrile compound. Based on a mass of the electrolytic solution, a mass percent of the fluoroethylene carbonate is A%, where 2 ≤ A ≤ 6, for example, A may be 2, 3, 4, 5, 6, or any value falling within a range formed by any two thereof. A mass percent of the trinitrile compound is B%, where 2 ≤ B ≤ 5. For example, B may be 2, 2.5, 3, 3.5, 4, 4.5, 5, or any value falling within a range formed by any two thereof. A and B satisfy: 4 ≤ A × B ≤ 20. For example, A × B may be 4, 5, 6, 8, 10, 12, 15, 17, 20, or any value falling within a range formed by any two thereof. A defect rate of the negative electrode is denoted by an Id/Ig ratio, and satisfies: 0.07 < Id/Ig ≤ 0.13. For example, the Id/Ig ratio may be 0.07, 0.08, 0.09, 0.10, 0.12, 0.13, or any value falling within a range formed by any two thereof. The mass percentA% of the fluoroethylene carbonate and the Id/Ig ratio satisfy: 1.5 ≤ A/(10 × Id/Ig) ≤ 8.6. For example, The value of A/(10×Id/Ig) may be 1.5, 2, 3, 3.5, 4, 5, 6, 7, 8, 8.6, or any value falling within a range formed by any two thereof. Without being limited to any theory, by adjusting the value of A×(10×Id/Ig) to fall within the foregoing range, the lithium-ion battery is excellent in cycle performance, energy density, and safety performance. The positive electrode according to this application may mean a positive electrode plate, and the negative electrode may mean a negative electrode plate. As found by the inventor of this application, by adjusting the value of A×B and the value of A/(10×Id/Ig) to fall within the foregoing ranges, the energy density and cycle performance of the lithium-ion battery can be improved. Without being limited to any theory, this may be because, when the electrolytic solution according to this application includes the trinitrile compound at a weight percent falling within the range specified above, the trinitrile compound can improve stability of a cathode electrolyte interface. However, the kinetic performance of the lithium-ion battery also needs to be improved to achieve a higher charging speed. In view of this, by adjusting the content of the fluoroethylene carbonate serving as a negative electrode film-forming additive, this application can improve the kinetic performance of the lithium-ion battery on the basis of alleviating lithium plating. By adjusting the value of A/(10×Id/Ig) synergistically, this application can balance the kinetic performance of the negative electrode and the high-temperature stability of the lithium-ion battery, thereby making the overall lithium-ion battery be excellent in cycle performance, energy density, and safety performance.

In an implementation solution of this application, the positive electrode includes a positive active material. The positive active material includes a metal element M. The metal element M includes at least one of Ti, Mg, or Al. The content of the metal element M in the positive active material is C ppm. C and B satisfy: 8 ≤ C × B/1000 ≤ 30. For example, the value of C×B/1000 may be 8, 10, 13, 15, 18, 20, 22, 25, 27, 30, or any value falling within a range formed by any two thereof. By adjusting the value of C×B/1000 to fall within the foregoing range, this application can improve the structural stability of the positive active material, and in turn, improve the energy density and cycle performance of the lithium-ion battery.

In an implementation solution of this application, the Id/Ig ratio and C satisfy: C/(1000 × Id/Ig) ≥ 20, and preferably 20 ≤ C/(1000 × Id/Ig) ≤ 70. The value of C/(1000×Id/Ig) may be 20, 25, 30, 35, 50, 55, 60, 70, or any value falling within a range formed by any two thereof. Without being limited to any theory, if the value of C/(1000×Id/Ig) is deficient (for example, less than 20), the value is adverse to improving the cycle stability of the lithium-ion battery. By adjusting the value of A×(10×Id/Ig) to fall within the foregoing range, the lithium-ion battery is excellent in cycle performance, energy density, and safety performance.

In this application, in the defect rate Id/Ig of the negative electrode, Id is the peak intensity of the D peak in a Raman spectrum of the negative active material, Ig is the peak intensity of the G peak in the Raman spectrum of the negative active material, and the Id/Ig ratio represents defect density of the negative active material. The higher the Id/Ig ratio, the denser the defects. The method for adjusting the defect rate of the negative electrode is not particularly limited in this application. For example, the method may be surface coating for the negative active material. The defect rate of the negative active material generally decreases with the increase of the coating area percentage by which the substrate is coated with a surface coating layer. Therefore, the defect rate of the negative active material can be adjusted by adjusting the coating area percentage by which the substrate is coated with the surface coating layer.

In an implementation solution of this application, a content C of a metal element M in a positive active material satisfies: 2000 ppm ≤ C ≤ 6500 ppm. For example, C may be 2000 ppm, 2500 ppm, 3000 ppm, 3500 ppm, 4000 ppm, 4500 ppm, 5000 ppm, 5500 ppm, 6000 ppm, 6500 ppm, or any value falling within a range formed by any two thereof. Without being limited to any theory, when C is deficient (for example, lower than 2000 ppm), the effect is limited in improving the cycle performance of the lithium-ion battery. When C is excessive (for example, higher than 6500 ppm), the relative content of the positive active material decreases, thereby being adverse to increasing the energy density. By adjusting the value of C to fall within the foregoing range, the lithium-ion battery is excellent in cycle performance, energy density, and safety performance.

In an implementation solution of this application, the electrolytic solution further includes ethylene carbonate and propylene carbonate. Based on a mass of the electrolytic solution, a mass percent of the ethylene carbonate is D%, a mass percent of the propylene carbonate is E%, and D and E satisfy: 15 ≤ D + E ≤ 40, and D/E ≥ 1.2, and preferably 1.2 ≤ D/E ≤ 3.5. For example, D+E may be 15, 20, 25, 30, 35, 40, or any value falling within a range formed by any two thereof, and the E/D ratio may be 1.2, 1.3, 1.4, 1.5, 2, 2.5, 3, 3.5, or any value falling within a range formed by any two thereof. Without being limited to any theory, by adjusting D+E and E/D synergistically to fall within the foregoing ranges, this application can further improve the energy density and cycle performance of the lithium-ion battery, alleviate lithium plating of the lithium-ion battery, and improve the safety of the lithium-ion battery.

In an implementation solution of this application, the mass percent D% of the ethylene carbonate and the mass percent A% of the fluoroethylene carbonate satisfy: D × A≥ 35, and preferably 35 ≤ D × A ≤ 150. For example, D×A may be 35, 50, 70, 80, 100, 110, 130, 150, or any value falling within a range formed by any two thereof. Without being limited to any theory, by adjusting the value of D×A to fall within the foregoing range, the lithium-ion battery is excellent in cycle performance, energy density, and safety performance.

In an implementation solution of this application, the mass percent B% of the trinitrile compound, the mass percent D% of the ethylene carbonate, the mass percent E% of the propylene carbonate satisfy: B × (D + E) ≤ 150. Preferably, 40 ≤ B × (D + E) ≤150. For example, B×(D+E) may be 40, 50, 60, 80, 100, 110, 130, 140, 150, or any value falling within a range formed by any two thereof. Without being limited to any theory, by adjusting the value of B×(D+E) to fall within the foregoing range, the lithium-ion battery is excellent in cycle performance, energy density, and safety performance.

In an implementation solution of this application, the electrolytic solution further includes a dinitrile compound. Based on the mass of the electrolytic solution, a mass percent of the dinitrile compound is F%, 1 ≤ F ≤ 6, and F and B satisfy: 4 ≤ F + B ≤ 9. For example, the value of F may be 1, 1.5, 2, 2.5, 3, 3.5, 4, 4.5, 5, 5.5, 6, or any value falling within a range formed by any two thereof. For example, the value of F+B may be 4, 4.5, 5, 5.5, 6.5, 7, 8, 8.5, 9, or any value falling within a range formed by any two thereof. Without being limited to any theory, by synergistically adjusting F and F+B to fall within the foregoing ranges, the positive electrode can be protected effectively, and the cycle performance and energy density of the lithium-ion battery can be further improved.

In an implementation solution of this application, the electrolytic solution further includes at least one of 1,3-propane sultone, ethylene sulfate, vinylene carbonate, dimethyl carbonate, diethyl carbonate, ethyl methyl carbonate, or γ-butyrolactone. The electrochemical device satisfies at least one of the following conditions: a) based on the mass of the electrolytic solution, a mass percent of the 1,3-propane sultone is 0.5% to 5%; b) based on the mass of the electrolytic solution, a mass percent of the ethylene sulfate is 0.1% to 1%; c) based on the mass of the electrolytic solution, a mass percent of the vinylene carbonate is 0.1% to 1%; d) based on the mass of the electrolytic solution, a mass percent of the dimethyl carbonate is 0.1% to 30%; e) based on the mass of the electrolytic solution, a mass percent of the diethyl carbonate is 0.1% to 30%; f) based on the mass of the electrolytic solution, a mass percent of the ethyl methyl carbonate is 0.1% to 30%; and g) based on the mass of the electrolytic solution, a mass percent of the γ-butyrolactone is 0.01% to 5%. Without being limited to any theory, by adjusting the foregoing additives in the electrolytic solution to fall within the ranges specified herein, the cycle performance and energy density of the lithium-ion battery can be further improved.

The trinitrile compound is not particularly limited in this application, as long as the objectives of this application can be achieved. For example, the trinitrile compound includes at least one of 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, or 1,2,5-tris(cyanoethoxy)pentane.

The electrolytic solution according to this application includes a lithium salt. The lithium salt is not particularly limited in this application, as long as the objectives of this application can be achieved. For example, the lithium salt includes at least one of lithium hexafluorophosphate, lithium bis(trifluoromethanesulfonyl)imide, lithium bis(fluorosulfonyl)imide, lithium tetrafluoroborate, lithium bis(oxalato)borate, lithium difluoro(oxalato)borate, or lithium difluorophosphate.

The dinitrile compound is not particularly limited in this application, as long as the objectives of this application can be achieved. For example, the dinitrile compound includes at least one of succinonitrile, glutaronitrile, adiponitrile, 1,5-dicyanopentane, 1,6-dicyano hexane, 1,7-dicyano heptane, 1,8-dicyano octane, 1,9-dicyano nonane, 1,10-dicyano decane, 1,12-dicyano dodecane, tetramethylsuccinonitrile, 2-methylglutaronitrile, 2,4-dimethylglutaronitrile, or 2,2,4,4-tetramethylglutaronitrile. A second aspect of this application provides an electronic device. The electronic device includes the electrochemical device described in the foregoing implementation solution of this application.

This application provides an electrochemical device and an electronic device. The electrolytic solution in the electrochemical device includes fluoroethylene carbonate and a trinitrile compound. The mass percent of the fluoroethylene carbonate is A%, 2 ≤ A ≤ 6, the mass percent of the trinitrile compound is B%, 2 ≤ B ≤ 5, and A and B satisfy: 4 ≤ A × B ≤ 20. The defect rate of the negative electrode is denoted by the Id/Ig ratio, and satisfies: 0.07 < Id/Ig ≤ 0.13. The mass percent A% of the fluoroethylene carbonate and the Id/Ig ratio satisfy: 1.5 ≤ A/(10 × Id/Ig) ≤ 8.6, thereby improving the cycle performance, energy density, and safety performance of the electrochemical device.

### DETAILED DESCRIPTION OF EMBODIMENTS

To make the objectives, technical solutions, and advantages of this application clearer, the following describes this application in more detail with reference to embodiments. Evidently, the described embodiments are merely a part of but not all of the embodiments of this application. All other embodiments derived by a person of ordinary skill in the art based on the embodiments of this application without making any creative efforts fall within the protection scope of this application.

It needs to be noted that in specific embodiments of this application, this application is construed by using a lithium-ion battery as an example of the electrochemical device, but the electrochemical device according to this application is not limited to the lithium-ion battery.

The method for preparing a positive active material containing a metal element M (hereinafter referred to as a modified positive active material) is not particularly limited in this application. The preparation method commonly used by a person skilled in the art may be employed. For example, the preparation method is to dope a positive active material LiCoO₂ with an aluminum-containing compound (such as Al₂O₃, Al(OH)₃, and AlF₃), a magnesium-containing compound (such as MgO), or a Ti-containing compound (such as TiO₂) to obtain the modified positive active material. In addition, in this application, by adjusting the content of the metal element M in the modified positive active material, for example, by adjusting the dosage of the compound containing the metal element M, the metal element M in the positive active material layer can be changed. The adjustment process is not particularly limited in this application, as long as the objectives of this application can be achieved.

The positive current collector is not particularly limited in this application, and may be any positive current collector well known in the art. For example, the positive current collector may be an aluminum foil, an aluminum alloy foil, or a composite current collector.

The negative current collector is not particularly limited in this application, and may be made of a material such as a metal foil or a porous metal sheet. For example, the negative current collector is a foil or porous plate made of a metal such as copper, nickel, titanium, or iron, or an alloy thereof, such as a copper foil. The negative active material layer includes a negative active material, a conductive agent, a binder, and a thickener. The binder may be at least one of styrene butadiene rubber (SBR), polyvinylidene difluoride (PVDF), polytetrafluoroethylene (PTFE), polyvinyl butyral (PVB), water-based acrylic resin (water-based acrylic resin), or carboxymethyl cellulose (CMC). The thickener may be carboxymethyl cellulose (CMC).

The substrate of the separator according to this application includes, but is not limited to, at least one of polyethylene (PE), polypropylene (PP), polyethylene terephthalate (PET), polyimide (PI), or aramid fiber. For example, the polyethylene includes a component selected from at least one of high-density polyethylene, low-density polyethylene, and ultra-high-molecular-weight polyethylene. Especially, the polyethylene and the polypropylene are highly effective in preventing short circuits, and can improve stability of the electrochemical device through a turn-off effect. The substrate may be a single-layer structure or a multi-layer hybrid composite structure with a thickness of 3 µm to 20 µm.

The electronic device according to this application is not particularly limited, and may be any electronic device known in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game console, a watch, an electric tool, a flashlight, a camera, a large household battery, a lithium-ion capacitor, and the like.

The preparation process of the electrochemical device is well known to a person skilled in the art, and is not particularly limited in this application. For example, a process of manufacturing a lithium-ion battery may include: stacking a positive electrode and a negative electrode that are separated by a separator, performing operations such as winding and folding as required, placing them into a housing, injecting an electrolytic solution into the housing, and sealing the housing. In addition, an overcurrent prevention element, a guide plate, and the like may be further placed into the housing as required, so as to prevent the rise of internal pressure, overcharge, and overdischarge of the lithium-ion battery.

The implementations of this application are described below in more detail with reference to embodiments and comparative embodiments. Various tests and evaluations are performed in accordance with the following methods. In addition, unless otherwise specified, "fraction" and "%" are a percent by mass.

### Test Methods and Devices

### Testing the content of the metal element M in the positive active material:

Scraping, by using a scraper, the active material off a positive electrode plate cleaned with dimethyl carbonate (DMC), and dissolving the active material with a mixed solvent (for example, 0.4 gram of positive active material is dissolved by a mixed solvent, where the mixed solvent is 10 mL of aqua regia (the aqua regia is nitric acid mixed with hydrochloric acid at a mixing ratio of 1: 1) mixed with 2 mL of HF. Bringing the solution to a predetermined volume of 100 mL, and then measuring the content (in ppm) of each metal element M such as Ti, Mg, and Al in the solution by using an ICP analyzer.

### Testing the defect rate of the negative electrode:

Keeping the surface of the dried negative electrode plate flat, and putting the negative electrode plate into a specimen holder of a Raman test instrument (JobinYvonLabRAM HR) for testing to obtain a Raman spectrum. Determining the peak intensity of the D peak and the peak intensity of the G peak in the Raman spectrogram, and calculating the Id/Ig ratio to represent the defect rate of the negative electrode.

### Testing the cycle performance of a lithium-ion battery:

Charging a lithium-ion battery at a constant current of 0.7 C rate in a 25 °C environment until the voltage reaches 4.5 V, then charging the battery at a constant voltage until the current reaches 0.05 C, and then discharging the battery at a constant current of 1 C until the voltage reaches 3.0 V, thereby completing one charge-and-discharge cycle, referred to as a first cycle. Recording the first-cycle discharge capacity of the lithium-ion battery. Repeating the charge-and-discharge cycle for the lithium-ion battery according to the foregoing steps, and recording the discharge capacity at the end of each cycle until the discharge capacity of the lithium-ion battery fades to 80% of the first-cycle discharge capacity. Recording the number of charge-and-discharge cycles.

### Testing the capacity of the lithium-ion battery:

Charging the lithium-ion battery at a constant current of 0.5 C rate in a 25±0.5 °C thermostat until the voltage reaches 4.5 V, and then charging the battery at a constant voltage of 4.5 V until the current reaches 0.05 C. Subsequently, discharging the battery at a constant current of 0.2 C rate until the voltage reaches 3 V, and measuring the discharge capacity at this time as the capacity of the lithium-ion battery.

### Testing the lithium plating growth rate of the lithium-ion battery:

1) Putting the lithium-ion battery into a 10 °C high/low temperature thermostat, and leaving the battery to stand for 30 minutes so that the temperature of the lithium-ion battery is constant.
2) After the lithium-ion battery reaches a constant-temperature state, discharging the lithium-ion battery at a constant current of 0.5 C until the voltage reaches 3.0 V.
3) Leaving the battery to stand for 10 minutes, and charging the battery at a constant current of 0.1 C until the voltage reaches 4.5 V, and then charging the battery at a constant voltage of 4.5 V until the current reaches 0.05 C (recording the charge capacity C1).
4) Leaving the battery to stand for 10 minutes, and discharging the battery at a constant current of 0.5 C until the voltage reaches 3.0 V. Leaving the battery to stand for 10 minutes, and discharging the battery at a constant current of 0.025 C until the voltage reaches 3.0 V. Further, leaving the battery to stand for 10 minutes, and discharging the battery at a constant current of 0.005 C until the voltage reaches 3.0 V. Recording the discharge capacity at the end of this step as D1.
5) Leaving the battery to stand for 10 minutes, and charging the battery at a constant current of 0.7 C until the voltage reaches 4.5 V, and then charging the battery at a constant voltage of 4.5 V until the current reaches 0.05 C.
6) Leaving the battery to stand for 10 minutes, and discharging the battery at a constant current of 0.5 C until the voltage reaches 3.0 V. Leaving the battery to stand for 10 minutes, and discharging the battery at a constant current of 0.025 C until the voltage reaches 3.0 V. Further, leaving the battery to stand for 10 minutes, and discharging the battery at a constant current of 0.005 C until the voltage reaches 3.0 V.
7) Repeating steps 5) and 6) for 12 times, and recording the discharge capacity at the end of the last cycle as D12. Calculating the lithium plating growth rate as an indicator of the charge performance (a lower lithium plating growth rate indicates milder lithium plating; when the lithium plating growth rate is less than 0.3, the lithium plating is hardly visible to the naked eye). The lithium plating growth rate is calculated by the following formula: $Lithium plating growth rate = \left(C1-D12\right) / C 1 .$

### Embodiment 1

### <Preparing a modified positive active material>

Mixing commercial lithium cobalt oxide (LiCoO₂) and an oxide containing a metal element M (a mixture of magnesium oxide (MgO), titanium dioxide (TiO₂), and aluminum oxide (Al₂O₃)) in a high-speed mixer at a speed of 300 r/min for 20 minutes. Putting the mixture in an air kiln, and increasing the temperature at a speed of 5 °C/min until 820 °C, and keeping the temperature for 24 hours. Naturally cooling the mixture, and then taking it out. Passing the mixture through a 300-mesh sieve to obtain a modified positive active material (that is, modified LiCoO₂). In the modified positive active material, the total content of the metal element M (Mg, Ti, Al) in the positive active material is 4000 ppm, and the molar ratio between Mg, Ti, and Al is 1: 1: 1.

### <Preparing a positive electrode plate>

Mixing the prepared modified LiCoO₂, a conductive agent carbon nanotubes (CNT), and a binder polyvinylidene difluoride (PVDF) at a mass ratio of 95: 2: 3, adding N-methyl-pyrrolidone (NMP) as a solvent, and stirring the mixture well with a vacuum mixer until the system is homogeneous, so as to obtain a positive slurry, in which a solid content is 75 wt%. Coating one surface of a 12-µm-thick positive current collector aluminum foil with the positive slurry evenly, and drying the aluminum foil at 85 °C. Performing cold calendering to obtain a positive electrode plate coated with a 100-µm-thick positive active material layer. Subsequently, repeating the foregoing steps on the other surface of the positive electrode plate to obtain a positive electrode plate coated with the positive active material layer on both sides. Cutting the positive electrode plate into a size of 74 mm × 867 mm, welding tabs, and leaving the positive electrode plate ready for use.

### <Preparing a negative electrode plate>

Mixing artificial graphite as a negative active material, styrene butadiene rubber (SBR), and carboxymethyl cellulose (CMC) at a mass ratio of 95: 2: 3, adding deionized water as a solvent, blending the mixture into a slurry with a solid content of 70 wt%, and stirring the slurry well. Coating one surface of a 8-µm-thick copper foil with the slurry evenly, and drying the foil at 110 °C. Performing cold calendering to obtain a negative electrode plate coated with a 150-µm-thick negative active material layer on a single side. Subsequently, repeating the foregoing coating steps on the other surface of the negative electrode plate to obtain a negative electrode plate coated with the negative active material layer on both sides. Cutting the negative electrode plate into a size of 74 mm × 867 mm, welding tabs, and leaving the negative electrode plate ready for use. The defect rate Id/Ig of the negative electrode plate is 0.1.

### <Preparing an electrolytic solution>

Mixing ethylene carbonate (EC), propylene carbonate (PC), and diethyl carbonate (DEC) well at a mass ratio of 1: 1: 1 in an argon atmosphere glovebox in which the moisture content is less than 10 ppm, so as to obtain a base solvent. Adding LiPF₆, a trinitrile compound 1,3,6-hexanetricarbonitrile and fluoroethylene carbonate. Stirring well to form an electrolytic solution, in which the concentration of LiPF ₆ is 12.5 wt%. Table 1 shows the mass weight of the trinitrile compound 1,3,6-hexanetricarbonitrile and the fluoroethylene carbonate.

### <Preparing a separator>

Using a 15-µm-thick polyethylene (PE) porous polymer film as a separator.

### <Preparing a lithium-ion battery>

Stacking the positive electrode plate, separator, and negative electrode plate sequentially in such a way that the separator is located between the positive electrode plate and the negative electrode plate to serve a function of separation, and winding the stacked structure to obtain an electrode assembly. Putting the electrode assembly into an aluminum plastic film package, dehydrating the packaged electrode assembly at 80 °C, and then injecting the prepared electrolytic solution. Performing vacuum sealing, standing, chemical formation, and shaping to obtain a lithium-ion battery.

### Embodiment 2 to Embodiment 5

Identical to Embodiment 1 except: the content of the fluoroethylene carbonate in the electrolytic solution is adjusted, the defect rate Id/Ig of the negative electrode plate is adjusted by adjusting the coating area percentage by which the substrate is coated with the coating layer of the negative electrode, and the relevant preparation parameters and performance changes are shown in Table 1.

### Embodiment 6 to Embodiment 8

Identical to Embodiment 1 except: the content of the fluoroethylene carbonate in the electrolytic solution and the content of the trinitrile compound are adjusted, and the relevant preparation parameters and performance changes are shown in Table 1.

### Embodiment 9 to Embodiment 20

Identical to Embodiment 1 except: the type of the trinitrile compound in the electrolytic solution, the content of the fluoroethylene carbonate, the content of the trinitrile compound, and the total content of the metal element M are adjusted, and the relevant preparation parameters and performance changes are shown in Table 2.

### Embodiment 21

Identical to Embodiment 18 except: in <Preparing a modified positive active material>, the oxide containing a metal element M is a mixture of MgO and Al₂O₃, the molar ratio between Mg and Al is 1: 1, and the relevant preparation parameters and performance changes are shown in Table 2.

### Embodiment 22

Identical to Embodiment 18 except: in <Preparing a modified positive active material>, the oxide containing a metal element M is Al₂O₃, and the relevant preparation parameters and performance changes are shown in Table 2.

### Embodiment 23

Identical to Embodiment 1 except that the process of <preparing an electrolytic solution> is different from that in Embodiment 1.

### <Preparing an electrolytic solution>

Mixing ethylene carbonate (EC), propylene carbonate (PC), and diethyl carbonate (DEC) well at a mass ratio of 9: 7: 64.5 in an argon atmosphere glovebox in which the moisture content is less than 10 ppm, so as to obtain a base solvent. Adding LiPF₆, a trinitrile compound 1,3,6-hexanetricarbonitrile and fluoroethylene carbonate. Stirring well to form an electrolytic solution, in which the concentration of LiPF₆ is 12.5 wt%. Table 3 shows the mass weight of the trinitrile compound 1,3,6-hexanetricarbonitrile and the fluoroethylene carbonate, and the relevant preparation parameters and performance changes.

### Embodiment 24

Identical to Embodiment 1 except that the process of <preparing an electrolytic solution> is different from that in Embodiment 1.

### <Preparing an electrolytic solution>

Mixing ethylene carbonate (EC), propylene carbonate (PC), and diethyl carbonate (DEC) well at a mass ratio of 20: 8: 52.5 in an argon atmosphere glovebox in which the moisture content is less than 10 ppm, so as to obtain a base solvent. Adding LiPF₆, a trinitrile compound 1,3,6-hexanetricarbonitrile and fluoroethylene carbonate. Stirring well to form an electrolytic solution, in which the concentration of LiPF₆ is 12.5 wt%. Table 3 shows the mass weight of the trinitrile compound 1,3,6-hexanetricarbonitrile and the fluoroethylene carbonate, and the relevant preparation parameters and performance changes.

### Embodiment 25

Identical to Embodiment 1 except that the process of <preparing an electrolytic solution> is different from that in Embodiment 1.

### <Preparing an electrolytic solution>

Mixing ethylene carbonate (EC), propylene carbonate (PC), and diethyl carbonate (DEC) well at a mass ratio of 30: 10: 40.5 in an argon atmosphere glovebox in which the moisture content is less than 10 ppm, so as to obtain a base solvent. Adding LiPF₆, a trinitrile compound 1,3,6-hexanetricarbonitrile and fluoroethylene carbonate. Stirring well to form an electrolytic solution, in which the concentration of LiPF₆ is 12.5 wt%. Table 3 shows the mass weight of the trinitrile compound 1,3,6-hexanetricarbonitrile and the fluoroethylene carbonate, and the relevant preparation parameters and performance changes.

### Embodiment 26

Identical to Embodiment 13 except that the process of <preparing an electrolytic solution> is different from that in Embodiment 13.

### <Preparing an electrolytic solution>

Mixing ethylene carbonate (EC), propylene carbonate (PC), and diethyl carbonate (DEC) well at a mass ratio of 1: 1: 1 in an argon atmosphere glovebox in which the moisture content is less than 10 ppm, so as to obtain a base solvent. Adding LiPF₆, a trinitrile compound 1,3,6-hexanetricarbonitrile, fluoroethylene carbonate, and a dinitrile compound succinonitrile. Stirring well to form an electrolytic solution, in which the concentration of LiPF₆ is 12.5 wt%. Table 4 shows the mass weight of the trinitrile compound 1,3,6-hexanetricarbonitrile, the fluoroethylene carbonate, and the dinitrile compound succinonitrile, and the relevant preparation parameters and performance changes.

### Embodiment 27 to Embodiment 31

Identical to Embodiment 26 except that, in <Preparing an electrolytic solution>, the type and content of the dinitrile compound are adjusted as shown in Table 4.

### Embodiment 32

Identical to Embodiment 13 except that the process of <preparing an electrolytic solution> is different from that in Embodiment 13.

### <Preparing an electrolytic solution>

Mixing ethylene carbonate (EC), propylene carbonate (PC), and diethyl carbonate (DEC) well at a mass ratio of 1: 1: 1 in an argon atmosphere glovebox in which the moisture content is less than 10 ppm, so as to obtain a base solvent. Adding LiPF₆, a trinitrile compound 1,3,6-hexanetricarbonitrile, fluoroethylene carbonate, and an additive 1,3-propane sultone. Stirring well to form an electrolytic solution, in which the concentration of LiPF₆ is 12.5 wt%. Table 4 shows the mass weight of the trinitrile compound 1,3,6-hexanetricarbonitrile, the fluoroethylene carbonate, and the additive 1,3-propane sultone, and the relevant preparation parameters and performance changes.

### Embodiment 33 to Embodiment 34

Identical to Embodiment 32 except that, in <Preparing an electrolytic solution>, the type and content of the additive are adjusted as shown in Table 5.

### Comparative Embodiment 1, Comparative Embodiment 2

Identical to Embodiment 1 except: the content of the fluoroethylene carbonate in the electrolytic solution and the content of the trinitrile compound are adjusted, and the relevant preparation parameters and performance changes are shown in Table 1.

### Comparative Embodiment 3 to Comparative Embodiment 6

Identical to Embodiment 1 except: the type of the trinitrile compound in the electrolytic solution, the content of the fluoroethylene carbonate, the content of the trinitrile compound, and the total content of the metal element M are adjusted, and the relevant preparation parameters and performance changes are shown in Table 2.

**Table 1**

| | Type of trinitrile compound | Content of fluoroethylene carbonate (A%) | Content of trinitrile compound (B%) | A×B | Id/Ig | A/(10×Id/Ig) | Battery capacity (mAh) | Capacity retention rate | Lithium plating growth rate |
|---|---|---|---|---|---|---|---|---|---|
| Embodiment 1 | 1,3,6-hexanetricarbonitrile | 2 | 2 | 4 | 0.13 | 1.5 | 3000 | 80% | 0 |
| Embodiment 2 | 1,3,6-hexanetricarbonitrile | 3 | 2 | 6 | 0.11 | 2.7 | 3000 | 84% | 0 |
| Embodiment 3 | 1,3,6-hexanetricarbonitrile | 4 | 2 | 8 | 0.09 | 4.4 | 3000 | 84% | 0 |
| Embodiment 4 | 1,3,6-hexanetricarbonitrile | 5 | 2 | 10 | 0.07 | 7.1 | 2995 | 82% | 0 |
| Embodiment 5 | 1,3,6-hexanetricarbonitrile | 6 | 2 | 12 | 0.07 | 8.6 | 2990 | 82% | 0 |
| Embodiment 6 | 1,3,6-hexanetricarbonitrile | 2 | 5 | 10 | 0.1 | 2 | 3020 | 83% | 0 |
| Embodiment 7 | 1,3,6-hexanetricarbonitrile | 4 | 4 | 8 | 0.1 | 4 | 3000 | 85% | 0 |
| Embodiment 8 | 1,3,6-hexanetricarbonitrile | 6 | 3 | 18 | 0.1 | 6 | 2990 | 85% | 0 |
| Comparative Embodiment 1 | 1,3,6-hexanetricarbonitrile | 1 | 3 | 3 | 0.1 | 1 | 2952 | 70% | 0 |
| Comparative Embodiment 2 | 1,3,6-hexanetricarbonitrile | 9 | 3 | 27 | 0.1 | 9 | 2900 | 50% | 1 |

**Table 2**

| | Type of trinitrile compound | Content of fluoroethyle ne carbonate (A%) | Content of trinitrile compound (B%) | Total content of metal element M (C%) | C×B/ 1000 | Id/Ig | C/(1000 ×Id/Ig) | Battery capacity (mAh) | Capacity retention rate | Lithium plating growth rate |
|---|---|---|---|---|---|---|---|---|---|---|
| Embodiment 9 | 1,3,6-hexanetricarbonitrile | 2 | 2 | 4000 | 8 | 0.1 | 40 | 3028 | 81% | 0 |
| Embodiment 10 | 1,3,6-hexanetricarbonitrile | 2 | 2.5 | 4000 | 10 | 0.1 | 40 | 3026 | 83% | 0 |
| Embodiment 11 | 1,3,6-hexanetricarbonitrile | 2 | 3 | 4000 | 12 | 0.1 | 40 | 3025 | 84% | 0 |
| Embodiment 12 | 1,3,6-hexanetricarbonitrile | 3 | 4 | 4000 | 16 | 0.1 | 40 | 3020 | 84% | 0 |
| Embodiment 13 | 1,3,6-hexanetricarbonitrile | 4 | 3 | 4000 | 12 | 0.1 | 40 | 3000 | 81% | 0 |
| Embodiment 14 | 1,3,6-hexanetricarbonitrile | 5 | 4 | 4000 | 16 | 0.1 | 40 | 2995 | 84% | 0 |
| Embodiment 15 | 1,3,6-hexanetricarbonitrile | 3 | 4 | 2000 | 8 | 0.1 | 20 | 3035 | 80% | 0 |
| Embodiment 16 | 1,3,6-hexanetricarbonitrile | 3 | 4 | 3000 | 12 | 0.1 | 30 | 3031 | 82% | 0 |
| Embodiment 17 | 1,3,6-hexanetricarbonitrile | 3 | 4 | 5000 | 20 | 0.1 | 50 | 3025 | 86% | 0 |
| Embodiment 18 | 1,3,6-hexanetricarbonitrile | 3 | 4 | 6500 | 26 | 0.1 | 65 | 3015 | 87% | 0 |
| Embodiment 19 | 1,2,3-tris(2-cyanoethoxy)propane | 3 | 4 | 4000 | 16 | 0.1 | 40 | 3027 | 84% | 0 |
| Embodiment 20 | 1,3,6-hexanetricarbonitrile + 1,2,3-tris(2-cyanoethoxy)propane (at a mass ratio of 1: 1) | 3 | 4 | 4000 | 16 | 0.1 | 40 | 3027 | 84% | 0 |
| Embodiment 21 | 1,3,6-hexanetricarbonitrile | 3 | 4 | 6500 | 26 | 0.1 | 65 | 3028 | 85% | 0 |
| Embodiment 22 | 1,3,6-hexanetricarbonitrile | 3 | 4 | 6500 | 26 | 0.1 | 65 | 3032 | 82% | 0 |
| Comparative Embodiment 3 | 1,3,6-hexanetricarbonitrile | 3 | 1 | 4000 | 2 | 0.1 | 40 | 2941 | 65% | 0 |
| Comparative Embodiment 4 | 1,3,6-hexanetricarbonitrile | 4 | 7 | 4000 | 14 | 0.1 | 40 | 2930 | 75% | 0.5 |
| Comparative Embodiment 5 | 1,3,6-hexanetricarbonitrile | 3 | 4 | 10000 | 40 | 0.1 | 100 | 2923 | 76% | 0.5 |
| Comparative Embodiment 6 | 1,3,6-hexanetricarbonitrile | 3 | 4 | 1000 | 0.8 | 0.1 | 10 | 2975 | 70% | 0.5 |

**Table 3**

| | Content of fluoroethylene carbonate (A%) | Content of trinitrile compound (B%) | Ethylene carbonate (D%) | Propylene carbonate (E%) | D+E | D/E | D×A | B×(D+E) | Battery capacity (mAh) | Capacity retention rate | Lithium plating growth rate |
|---|---|---|---|---|---|---|---|---|---|---|---|
| Embodiment 13 | 4 | 3 | 26.8 | 26.8 | 53.6 | 1 | 107. 2 | 160.8 | 3000 | 81% | 0 |
| Embodiment 23 | 4 | 3 | 9 | 7 | 16 | 1.29 | 36 | 48 | 3000 | 84% | 0 |
| Embodiment 24 | 4 | 3 | 20 | 8 | 28 | 2.5 | 80 | 84 | 3000 | 85% | 0 |
| Embodiment 25 | 4 | 3 | 30 | 10 | 40 | 3 | 120 | 120 | 3000 | 84.50% | 0 |

**Table 4**

| | Type of dinitrile compound | Content of dinitrile compound (F%) | Content of trinitrile compound (B%) | F+B | Battery capacity (mAh) | Capacity retention rate | Lithium plating growth rate |
|---|---|---|---|---|---|---|---|
| Embodiment 13 | / | / | 3 | / | 3000 | 81% | 0 |
| Embodiment 26 | Succinonitrile | 1 | 3 | 4 | 3000 | 82% | 0 |
| Embodiment 27 | Succinonitrile | 3 | 3 | 6 | 3000 | 83% | 0 |
| Embodiment 28 | Succinonitrile | 6 | 3 | 9 | 2990 | 82% | 0 |
| Embodiment 29 | Adiponitrile | 3 | 3 | 6 | 3000 | 83% | 0 |
| Embodiment 30 | 2-methyl glutaronitrile | 3 | 3 | 6 | 3000 | 82% | 0 |
| Embodiment 31 | Succinonitrile + adiponitrile (at a mass ratio of 1: 1) | 3 | 3 | 6 | 3000 | 83% | 0 |

| | | | | | | | |
|---|---|---|---|---|---|---|---|
| In Table 4, "/" means "not contained" or "not measured". | | | | | | | |

**Table 5**

| | Type of additive | Type and content of additive (%) | Battery capacity (mAh) | Capacity retention rate | Lithium plating growth rate |
|---|---|---|---|---|---|
| Embodiment 13 | / | / | 3000 | 81% | 0 |
| Embodiment 32 | 1,3-propane sultone | 3 | 3000 | 83% | 0 |
| Embodiment 33 | Ethylene sulfate | 0.5 | 3000 | 81.5% | 0 |
| Embodiment 34 | 1,3-propane sultone + ethylene sulfate (at a mass ratio of 3: 1) | 4 | 3000 | 84% | 0 |

| | | | | | |
|---|---|---|---|---|---|
| In Table 5, "/" means "not contained" or "not measured". | | | | | |

As can be seen from Embodiments 1 to 8 and Comparative Embodiments 1 to 2 in Table 1, by adjusting the values of A×B and A/(10×Id/Ig) to fall within the range specified herein, the battery capacity and the capacity retention rate of the lithium-ion battery are improved significantly, and the lithium-ion battery incurs no lithium plating, indicating that the lithium-ion battery according to this application is excellent in cycle performance, capacity performance, and safety performance.

As can be seen from Embodiments 9 to 14 and Comparative Embodiments 3 to 4 in Table 2, on the basis that the values of A×B and A/(10×Id/Ig) fall within the range specified herein, by adjusting the value of C×B/1000 to fall within the range specified herein, the battery capacity and the capacity retention rate of the lithium-ion battery are improved significantly, and the lithium-ion battery incurs no lithium plating, indicating that the lithium-ion battery according to this application is excellent in cycle performance, capacity performance, and safety performance.

As can be seen from Embodiments 15 to 18 and Comparative Embodiments 5 to 6 in Table 2, when the content of the metal element M is excessive (as in Comparative Embodiment 5), the battery capacity and capacity retention rate of the lithium-ion battery decrease significantly, and slight lithium plating occurs; when the content of the metal element M is deficient (as in Comparative Embodiment 6), the battery capacity and capacity retention rate of the lithium-ion battery also decrease significantly, and slight lithium plating occurs. Evidently, on the basis that the values of A×B and A/(10×Id/Ig) fall within the ranges specified herein, by adjusting the content of the metal element M and the value of C×B/1000 to fall within the ranges specified herein, the lithium-ion battery is excellent in cycle performance, capacity performance, and safety performance.

As can be seen from Embodiments 12, 19, and 20 in Table 2, on the basis that the values of A×B and A/(10×Id/Ig) fall within the ranges specified herein, a lithium-ion battery that is excellent in cycle performance and safety performance can be obtained as long as the type of trinitrile compound falls within the range specified herein.

As can be seen from Embodiments 18, 21, and 22, on the basis that the values of A×B and A/(10×Id/Ig) fall within the ranges specified herein, a lithium-ion battery that is excellent in cycle performance and safety performance can be obtained as long as the type of the metal element M falls within the range specified herein.

As can be seen from Embodiments 9 to 22 in Table 2, on the basis that the values of A×B and A/(10×Id/Ig) fall within the ranges specified herein, a lithium-ion battery that is excellent in battery capacity, capacity retention rate, and safety performance can be obtained by adjusting the value of C/(1000×Id/Ig) to fall within the range specified herein.

As can be seen from Embodiment 13 and Embodiments 23 to 25 in Table 3, on the basis that the values of A×B and A/(10×Id/Ig) fall within the ranges specified herein, a lithium-ion battery that is excellent in cycle performance can be obtained by adjusting the content of the ethylene carbonate and the propylene carbonate.

As can be seen from Embodiment 13 and Embodiments 26 to 31 in Table 4, on the basis that the values of A×B and A/(10×Id/Ig) fall within the ranges specified herein, the cycle performance of the lithium-ion battery can be further improved when the electrolytic solution further includes a dinitrile compound and when a sum of content of the dinitrile compound and the trinitrile compound falls within the range specified herein.

As can be seen from Embodiment 13 and Embodiments 32 to 34 in Table 5, on the basis that the values of A×B and A/(10×Id/Ig) fall within the ranges specified herein, the cycle performance of the lithium-ion battery can be further improved when the electrolytic solution further includes at least one additive selected from 1,3-propane sultone, ethylene sulfate, vinylene carbonate, dimethyl carbonate, diethyl carbonate, ethyl methyl carbonate, or γ-butyrolactone.

What is described above is merely preferred embodiments of this application, but is not intended to limit this application.

## Claims

1. An electrochemical device, comprising a positive electrode, a negative electrode, a separator, and an electrolytic solution, **characterized in that**,
the electrolytic solution comprises fluoroethylene carbonate and a trinitrile compound, based on a mass of the electrolytic solution, a mass percent of the fluoroethylene carbonate is A%, 2 ≤ A ≤ 6, a mass percent of the trinitrile compound is B%, 2 ≤ B ≤ 5, 4 ≤ A × B ≤ 20, a defect rate of the negative electrode is denoted by an Id/Ig ratio, and 0.07 < Id/Ig ≤ 0.13 and 1.5 ≤ A/(10 × Id/Ig) ≤ 8.6.

2. The electrochemical device according to claim 1, **characterized in that**, the positive electrode comprises a positive active material, the positive active material comprises a metal element M, the metal element M comprises at least one of Ti, Mg, or Al, a content of the metal element M in the positive active material is C ppm, and 8 ≤ C × B/1000 ≤ 30.

3. The electrochemical device according to claim 2, **characterized in that**, C/(1000 × Id/Ig) ≥ 20.

4. The electrochemical device according to any one of claims 1 to 3, **characterized in that**, 2000 ppm ≤ C ≤ 6500 ppm.

5. The electrochemical device according to any one of claims 1 to 4, **characterized in that**, the electrolytic solution further comprises ethylene carbonate and propylene carbonate; based on a mass of the electrolytic solution, a mass percent of the ethylene carbonate is D%, a mass percent of the propylene carbonate is E%, 15 ≤ D + E ≤ 40, and D/E ≥ 1.2.

6. The electrochemical device according to claim 5, **characterized in that**, D × A ≥ 35.

7. The electrochemical device according to claim 5 or 6, **characterized in that**, B × (D + E) ≤ 150.

8. The electrochemical device according to any one of claims 1 to 7, **characterized in that**, the electrolytic solution further comprises a dinitrile compound; based on the mass of the electrolytic solution, a mass percent of the dinitrile compound is F%, 1 ≤ F ≤ 6, and 4 ≤ F + B ≤ 9.

9. The electrochemical device according to any one of claims 1 to 8, **characterized in that**, the electrolytic solution further comprises at least one of 1,3-propane sultone, ethylene sulfate, vinylene carbonate, dimethyl carbonate, diethyl carbonate, ethyl methyl carbonate, or γ-butyrolactone.

10. The electrochemical device according to claim 9, **characterized in that**, the electrochemical device satisfies at least one of the following conditions:
a) the electrolytic solution comprises the 1,3-propane sultone; based on the mass of the electrolytic solution, a mass percent of the 1,3-propane sultone is 0.5% to 5%;
b) the electrolytic solution comprises the ethylene sulfate; based on the mass of the electrolytic solution, a mass percent of the ethylene sulfate is 0.1% to 1%;
c) the electrolytic solution comprises the vinylene carbonate; based on the mass of the electrolytic solution, a mass percent of the vinylene carbonate is 0.1% to 1%;
d) the electrolytic solution comprises the dimethyl carbonate; based on the mass of the electrolytic solution, a mass percent of the dimethyl carbonate is 0.1% to 30%;
e) the electrolytic solution comprises the diethyl carbonate; based on the mass of the electrolytic solution, a mass percent of the diethyl carbonate is 0.1% to 30%;
f) the electrolytic solution comprises the ethyl methyl carbonate; based on the mass of the electrolytic solution, a mass percent of the ethyl methyl carbonate is 0.1% to 30%; or
g) the electrolytic solution comprises the γ-butyrolactone; based on the mass of the electrolytic solution, a mass percent of the γ-butyrolactone is 0.01% to 5%.

11. The electrochemical device according to any one of claims 1 to 10, **characterized in that**, the trinitrile compound comprises at least one of 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, or 1,2,5-tris(cyanoethoxy)pentane.

12. The electrochemical device according to any one of claims 1 to 11, **characterized in that**, the electrolytic solution comprises a lithium salt, and the lithium salt comprises at least one of lithium hexafluorophosphate, lithium bis(trifluoromethanesulfonyl)imide, lithium bis(fluorosulfonyl)imide, lithium tetrafluoroborate, lithium bis(oxalato)borate, lithium difluoro(oxalato)borate, or lithium difluorophosphate.

13. The electrochemical device according to any one of claims 8 to 12, **characterized in that**, the dinitrile compound comprises at least one of succinonitrile, glutaronitrile, adiponitrile, 1,5-dicyanopentane, 1,6-dicyano hexane, 1,7-dicyano heptane, 1,8-dicyano octane, 1,9-dicyano nonane, 1,10-dicyano decane, 1,12-dicyano dodecane, tetramethylsuccinonitrile, 2-methylglutaronitrile, 2,4-dimethylglutaronitrile, or 2,2,4,4-tetramethylglutaronitrile.

14. An electronic device, comprising the electrochemical device according to any one of claims 1 to 13.

## Patentansprüche

1. Elektrochemische Vorrichtung, umfassend eine positive Elektrode, eine negative Elektrode, einen Separator und eine Elektrolytlösung, **dadurch gekennzeichnet, dass** die Elektrolytlösung Fluorethylencarbonat und eine Trinitrilverbindung umfasst, bezogen auf die Masse der Elektrolytlösung der Massenanteil des Fluorethylencarbonats A %, 2 ≤ A ≤ 6 beträgt, der Massenanteil der Trinitrilverbindung B %, 2 ≤ B ≤ 5, 4 ≤ A × B ≤ 20 beträgt, die Defektrate der negativen Elektrode durch ein Id/Ig-Verhältnis bezeichnet wird und 0,07 < Id/Ig ≤ 0,13 sowie 1,5 ≤ A/(10 × Id/Ig) ≤ 8,6 ist.

2. Elektrochemische Vorrichtung nach Anspruch 1, **dadurch gekennzeichnet, dass** die positive Elektrode ein positives Aktivmaterial umfasst, das positive Aktivmaterial ein Metallelement M umfasst, das Metallelement M mindestens eines der Elemente Ti, Mg oder Al umfasst, der Gehalt des Metallelements M im positiven Aktivmaterial C ppm beträgt und 8 ≤ C × B/1000 ≤ 30 ist.

3. Elektrochemische Vorrichtung nach Anspruch 2, **dadurch gekennzeichnet, dass** C/(1000 × Id/Ig) ≥ 20 ist.

4. Elektrochemische Vorrichtung nach einem der Ansprüche 1 bis 3, **dadurch gekennzeichnet, dass** 2000 ppm ≤ C ≤ 6500 ppm ist.

5. Elektrochemische Vorrichtung nach einem der Ansprüche 1 bis 4, **dadurch gekennzeichnet, dass** die Elektrolytlösung ferner Ethylencarbonat und Propylencarbonat umfasst; bezogen auf die Masse der Elektrolytlösung beträgt der Massenanteil des Ethylencarbonats D %, der Massenanteil des Propylencarbonats E % ist 15 ≤ D + E ≤ 40 und D/E ≥ 1,2.

6. Elektrochemische Vorrichtung nach Anspruch 5, **dadurch gekennzeichnet, dass** D × A ≥ 35 ist.

7. Elektrochemische Vorrichtung nach Anspruch 5 oder 6, **dadurch gekennzeichnet, dass** B × (D + E) ≤ 150 ist.

8. Elektrochemische Vorrichtung nach einem der Ansprüche 1 bis 7, **dadurch gekennzeichnet, dass** die Elektrolytlösung ferner eine Dinitrilverbindung umfasst; bezogen auf die Masse der Elektrolytlösung beträgt der Massenanteil der Dinitrilverbindung F %, 1 ≤ F ≤ 6 und 4 ≤ F + B ≤ 9.

9. Elektrochemische Vorrichtung nach einem der Ansprüche 1 bis 8, **dadurch gekennzeichnet, dass** die Elektrolytlösung ferner mindestens eines der Folgenden umfasst: 1,3-Propansulton, Ethylensulfat, Vinylencarbonat, Dimethylcarbonat, Diethylcarbonat, Ethylmethylcarbonat oder γ-Butyrolacton.

10. Elektrochemische Vorrichtung nach Anspruch 9, **dadurch gekennzeichnet, dass** die elektrochemische Vorrichtung mindestens eine der folgenden Bedingungen erfüllt:
a) die Elektrolytlösung umfasst 1,3-Propansulton; bezogen auf die Masse der Elektrolytlösung beträgt der Massenanteil des 1,3-Propansultons 0,5 % bis 5 %;
b) die Elektrolytlösung umfasst Ethylensulfat; bezogen auf die Masse der Elektrolytlösung beträgt der Massenanteil des Ethylensulfats 0,1 % bis 1 %;
c) die Elektrolytlösung umfasst Vinylencarbonat; bezogen auf die Masse der Elektrolytlösung beträgt der Massenanteil des Vinylencarbonats 0,1 % bis 1 %;
d) die Elektrolytlösung umfasst Dimethylcarbonat; bezogen auf die Masse der Elektrolytlösung beträgt der Massenanteil des Dimethylcarbonats 0,1 % bis 30 %;
e) die Elektrolytlösung umfasst Diethylcarbonat; bezogen auf die Masse der Elektrolytlösung beträgt der Massenanteil des Diethylcarbonats 0,1 % bis 30 %;
f) die Elektrolytlösung umfasst Ethylmethylcarbonat; bezogen auf die Masse der Elektrolytlösung beträgt der Massenanteil des Ethylmethylcarbonats 0,1 % bis 30 %; oder
g) die Elektrolytlösung umfasst γ-Butyrolacton; bezogen auf die Masse der Elektrolytlösung beträgt der Massenanteil des γ-Butyrolactons 0,01 % bis 5 %.

11. Elektrochemische Vorrichtung nach einem der Ansprüche 1 bis 10, **dadurch gekennzeichnet, dass** die Trinitrilverbindung mindestens eines der Folgenden umfasst: 1,3,5-Pentantricarbonitril, 1,2,3-Propantricarbonitril, 1,3,6-Hexantricarbonitril, 1,2,6-Hexantricarbonitril, 1,2,3-Tris(2-cyanoethoxy)propan, 1,2,4-Tris(2-cyanoethoxy)butan oder 1,2,5-Tris(cyanoethoxy)pentan.

12. Elektrochemische Vorrichtung gemäß einem der Ansprüche 1 bis 11, **dadurch gekennzeichnet, dass** die Elektrolytlösung ein Lithiumsalz umfasst und das Lithiumsalz mindestens eines der Folgenden umfasst: Lithiumhexafluorophosphat, Lithiumbis(trifluormethansulfonyl)imid, Lithiumbis(fluorsulfonyl)imid, Lithiumtetrafluoroborat, Lithiumbis(oxalato)borat, Lithiumdifluor(oxalato)borat oder Lithiumdifluorophosphat.

13. Elektrochemische Vorrichtung nach einem der Ansprüche 8 bis 12, **dadurch gekennzeichnet, dass** die Dinitrilverbindung mindestens eines der Folgenden umfasst: Succinonitril, Glutaronitril, Adiponitril, 1,5-Dicyanopentan, 1,6-Dicyanohexan, 1,7-Dicyanoheptan, 1,8-Dicyanooctan, 1,9-Dicyanononan, 1,10-Dicyanodecan, 1,12-Dicyanododecan, Tetramethylsuccinonitril, 2-Methylglutaronitril, 2,4-Dimethylglutaronitril oder 2,2,4,4-Tetramethylglutaronitril.

14. Elektronische Vorrichtung, umfassend die elektrochemische Vorrichtung nach einem der Ansprüche 1 bis 13.

## Revendications

1. Dispositif électrochimique, comprenant une électrode positive, une électrode négative, un séparateur et une solution électrolytique, **caractérisé en ce que**,
la solution électrolytique comprend du carbonate de fluoroéthylène et un composé trinitrile, sur la base de la masse de la solution électrolytique, le pourcentage en masse du carbonate de fluoroéthylène est de A %, où 2 ≤ A ≤ 6, le pourcentage en masse du composé trinitrile est de B %, où 2 ≤ B ≤ 5, 4 ≤ A × B ≤ 20, le taux de défaut de l'électrode négative est représenté par le rapport Id/Ig, et 0,07 < Id/Ig ≤ 0,13 et 1,5 ≤ A/(10 × Id/Ig) ≤ 8,6.

2. Dispositif électrochimique selon la revendication 1, **caractérisé en ce que** l'électrode positive comprend un matériau actif positif, le matériau actif positif comprend un élément métallique M, l'élément métallique M comprend au moins l'un des éléments parmi Ti, Mg ou A1, la teneur de l'élément métallique M dans le matériau actif positif est de C ppm, et 8 ≤ C × B/1 000 ≤ 30.

3. Dispositif électrochimique selon la revendication 2, **caractérisé en ce que** C/(1 000 × Id/Ig) ≥ 20.

4. Dispositif électrochimique selon l'une quelconque des revendications 1 à 3, **caractérisé en ce que** 2 000 ppm ≤ C ≤ 6 500 ppm.

5. Dispositif électrochimique selon l'une quelconque des revendications 1 à 4, **caractérisé en ce que** la solution électrolytique comprend en outre du carbonate d'éthylène et du carbonate de propylène ; sur la base du rapport massique de la solution électrolytique, le pourcentage en masse du carbonate d'éthylène est de D %, le pourcentage en masse du carbonate de propylène est de E %, 15 ≤ D + E ≤ 40, et D/E ≥ 1,2.

6. Dispositif électrochimique selon la revendication 5, **caractérisé en ce que** D × A ≥ à 35.

7. Dispositif électrochimique selon la revendication 5 ou 6, **caractérisé en ce que** B × (D + E) ≤ 150.

8. Dispositif électrochimique selon l'une quelconque des revendications 1 à 7, **caractérisé en ce que** la solution électrolytique comprend en outre un composé dinitrile ; sur la base de la masse de la solution électrolytique, le pourcentage en masse du composé dinitrile est de F %, 1 ≤ F ≤ 6, et 4 ≤ F + B ≤ 9.

9. Dispositif électrochimique selon l'une quelconque des revendications 1 à 8, **caractérisé en ce que** la solution électrolytique comprend en outre au moins l'un parmi le 1,3-propane-sultone, le sulfate d'éthylène, le carbonate de vinylène, le carbonate de diméthyle, le carbonate de diéthyle, le carbonate de méthyle d'éthyle ou la γ-butyrolactone.

10. Dispositif électrochimique selon la revendication 9, **caractérisé en ce que** le dispositif électrochimique satisfait à au moins l'une des conditions suivantes :
a) la solution électrolytique comprend du 1,3-propane-sultone ; sur la base de la masse de la solution électrolytique, le pourcentage en masse de 1,3-propane-sultone est compris entre 0,5 et 5 % ;
b) la solution électrolytique comprend du sulfate d'éthylène ; sur la base de la masse de la solution électrolytique, le pourcentage en masse de sulfate d'éthylène est compris entre 0,1 et 1 % ;
c) la solution électrolytique comprend du carbonate de vinylène ; sur la base de la masse de la solution électrolytique, le pourcentage en masse de carbonate de vinylène est compris entre 0,1 et 1 % ;
d) la solution électrolytique comprend du carbonate de diméthyle ; sur la base de la masse de la solution électrolytique, le pourcentage en masse de carbonate de diméthyle est compris entre 0,1 et 30 % ;
e) la solution électrolytique comprend du carbonate de diéthyle ; sur la base de la masse de la solution électrolytique, le pourcentage en masse de carbonate de diéthyle est compris entre 0,1 et 30 % ;
f) la solution électrolytique comprend du carbonate de méthyle d'éthyle ; sur la base de la masse de la solution électrolytique, le pourcentage en masse de carbonate de méthyle d'éthyle est compris entre 0,1 et 30 % ; ou
g) la solution électrolytique comprend de la γ-butyrolactone ; sur la base de la masse de la solution électrolytique, le pourcentage en masse de γ-butyrolactone est compris entre 0,01 et 5 %.

11. Dispositif électrochimique selon l'une quelconque des revendications 1 à 10, **caractérisé en ce que** le composé trinitrile comprend au moins l'un parmi le 1,3,5-pentanetricarbonitrile, le 1,2,3-propanetricarbonitrile, le 1,3,6-hexanetricarbonitrile, le 1,2,6-hexanetricarbonitrile, le 1,2,3-tris(2-cyanoéthoxy)propane, le 1,2,4-tris(2-cyanoéthoxy)butane ou le 1,2,5-tris(cyanoéthoxy)pentane.

12. Dispositif électrochimique selon l'une quelconque des revendications 1 à 11, **caractérisé en ce que** la solution électrolytique comprend un sel de lithium, et le sel de lithium comprend au moins l'un parmi l'hexafluorophosphate de lithium, le bis(trifluorométhanesulfonyle)imide de lithium, le bis(fluorosulfonyle)imide de lithium, le tétrafluoroborate de lithium, le bis(oxalato)borate de lithium, le difluoro(oxalato)borate de lithium ou le difluorophosphate de lithium.

13. Dispositif électrochimique selon l'une quelconque des revendications 8 à 12, **caractérisé en ce que** le composé dinitrile comprend au moins l'un parmi le succinonitrile, le glutaronitrile, l'adiponitrile, le 1,5-dicyanopentane, le 1,6-dicyanohexane, le 1,7-dicyanoheptane, le 1,8-dicyano-octane, le 1,9-dicyano-nonane, le 1,10-dicyano-décane, le 1,12-dicyano-dodécane, le tétraméthylsuccinonitrile, le 2-méthylglutaronitrile, le 2,4-diméthylglutaronitrile ou le 2,2,4,4-tétraméthylglutaronitrile.

14. Dispositif électronique, comprenant le dispositif électrochimique selon l'une quelconque des revendications 1 à 13.
